## Europäisches Patentamt
## European Patent Office
## Office européen des brevets

(19)

(11) Numéro de publication: **0 033 053**
**B1**

(12) **FASCICULE DE BREVET EUROPEEN**

(45) Date de publication du fascicule du brevet: **18.07.84**

(51) Int. Cl.³: **B 64 C 39/12**

(21) Numéro de dépôt: **80401899.2**

(22) Date de dépôt: **31.12.80**

(54) Avion à voilure fixe comportant des surfaces portantes placées en tandem.

(30) Priorité: **09.01.80 FR 8000443**

(43) Date de publication de la demande:
**05.08.81 Bulletin 81/31**

(45) Mention de la délivrance du brevet:
**18.07.84 Bulletin 84/29**

(84) Etats contractants désignés:
**DE GB IT NL**

(56) Documents cités:
**FR - A - 943 005**
**FR - A - 1 032 665**
**FR - A - 2 272 893**
**US - A - 2 430 793**
**US - A - 2 747 816**
**US - A - 4 124 180**

(73) Titulaire: **AIRBUS INDUSTRIE**
**Avenue Lucien Servanty B. P. no 33**
**F-31700 Blagnac (FR)**

(72) Inventeur: **Beteille, Roger Henri**
**Avenue Lucien Servanty B.P. no 33**
**F-31700 Blagnac (FR)**

(74) Mandataire: **Durand, Yves Armand Louis et al,**
**Cabinet Z. Weinstein 20, Avenue de Friedland**
**F-75008 Paris (FR)**

Courier Press, Leamington Spa, England.

## Description

La présente invention concerne généralement un avion du type comprenant des ailes principales fixées en un point intermédiaire du fuselage, chaque aile principale comportant au moins un volet hypersustentateur et au moins un bec de bord d'attaque, un empennage horizontal à au moins un plan stabilisateur monté à l'arrière du fuselage et muni d'une gouverne de profondeur, et un empennage canard monté à l'avant du fuselage en avant du centre de gravité de l'avion et comportant, de chaque côté, un plan pourvu d'une gouverne mobile de bord de fuite, et des moyens de commande pour asservir la position angulaire de chaque gouverne dudit empennage canard à des paramètres influençant la stabilité longitudinale de l'avion.

Un avion de ce type est décrit par exemple dans le brevet français n° 1 032 665. Or, le fait de prévoir trois surfaces portantes, au lieu de deux, c'est-à-dire une aile avant et une aile arrière, comme par exemple dans le brevet français n° 943 005, permet d'équilibrer tous les moments de tangage produits par l'aile, le fuselage ou le moteur dans toutes les phases possibles du vol (vitesse élevée et vitesse lente) par une force de portance produite soit par la surface canard, soit par l'empennage arrière.

Pour améliorer les performances d'un avion à trois surfaces portantes de ce type, selon l'invention, chaque gouverne dudit empennage canard est asservie à la position angulaire dudit plan stabilisateur, à position angulaire sélectivement variable, dudit empennage horizontal par l'intermédiaire desdits moyens de commande.

Ainsi, la surface canard peut être équilibrée en relation avec l'empennage arrière de façon que des deux surfaces de commande présentent une portance telle que pour une condition de vol donnée (vitesse, altitude, poids, centre de gravité) la traînée de l'avion soit minimale.

Selon une autre caractéristique de l'invention, chaque gouverne précitée de l'empennage canard précité est asservie à la vitesse de vol de l'avion.

L'invention sera mieux comprise et d'autres caractéristiques, détails et avantages de celle-ci apparaîtront plus clairement à la lecture de la description explicative qui va suivre en se reportant aux dessins schématiques annexés donnés uniquement à titre d'exemples non limitatifs illustrant un mode de réalisation spécifique actuellement préféré de l'invention et dans lesquels:

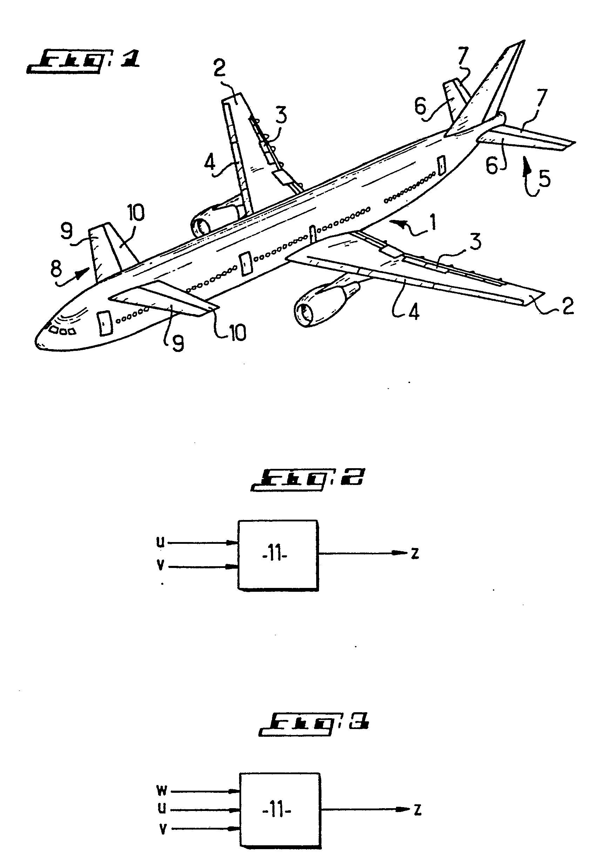

La figure 1 représente une vue en perspective d'un gros avion de transport équipé du perfectionnement conforme à l'invention.

La figure 2 représente un schéma synoptique fonctionnel d'un exemple d'exécution d'un système de servo-commande de gouverne de bord de fuite de l'empennage canard à asservissement en position par exemple en chaîne ouverte aux angles de braquage respectifs des volets hypersustentateurs et des becs de bord d'attaque de la voilure principale.

La figure 3 est une vue semblable à la figure 1 d'une variante d'exécution où l'angle de braquage de la gouverne de bord de fuite de l'empennage canard est asservi, en chaîne ouverte, à la fois aux angles de braquage précités et à l'angle d'incidence de l'avion ou à son nombre de Mach ou à sa vitesse de vol.

Selon la forme de réalisation de la figure 1, l'avion comporte un fuselage 1 en particulier relativement long, muni d'ailes principales 2 à volets hypersustentateurs 3 et à becs de bord d'attaque réglables 4, d'un empennage horizontal arrière 5 ayant, de chaque côté, un plan stabilisateur fixe ou réglable 6 dont le bord de fuite est pourvu d'une gouverne mobile de profondeur 7, et, enfin à la partie avant du fuselage, d'un empennage canard 8 comportant, de chaque côté, un plan canard 9 à position angulaire fixe ou sélectivement variable et dont le bord de fuite est muni d'une gouverne ou d'un aileron mobile 10.

Chaque plan stabilisateur 6 de l'empennage horizontal 5 est avantageusement à position relative ou orientation angulaire sélectivement réglable en vol pour compenser les moments longitudinaux stationnaires tandis que sa gouverne de profondeur est génératrice de moments longitudinaux de commande.

Chaque gouverne de bord de fuite 10 de l'empennage canard 8 a son mouvement de débattement angulaire conjugé avec le déplacement des volets hypersustentateurs 3 des ailes principales 2, en particulier en fonction de la course de sortie de ces volets, de façon que le mouvement des volets hypersustentateurs 3 provoque ou entraîne automatiquement celui des gouvernes 10 dans un rapport prédéterminé de corrélation cinématique mutuelle. Le mouvement de chaque gouverne 10 d'empennage canard peut aussi être dépendant de celui des becs mobiles de bord d'attaque 4 des ailes principales 2 et, cela, soit isolément ou séparément, soit en combinaison ou en superposition avec le mouvement des volets hypersustentateurs 3.

Une telle coordination, entre les gouvernes 10 d'empennage canard et les volets hypersustentateurs 3 et/ou les becs de bord d'attaque des ailes 2, est réalisée au moyen d'un système d'asservissement notamment en position, lequel peut être à chaîne soit ouverte (sans boucle de régulation) ou fermée (avec boucle de réaction). La figure 2 représente symboliquement le schéma synoptique fonctionnel d'un exemple de réalisation d'un tel système d'asservissement qui comporte essentiellement un calculateur de bord 11 de nature ou de conception avantageusement électronique présentant par exemple:

— d'une part, au moins deux entrées pour les grandeurs physiques de consigne destinées

3 **O 033 053** 4

à imposer une loi déterminée de variation à une grandeur à régler; ces grandeurs de consigne étant constituées ici respectivement par la valeur principale u de l'angle de braquage des volets hypersustentateurs 3 et par la valeur principale v de l'angle de braquage des becs de bord d'attaque 4; et — d'autre part, une sortie pour la grandeur à régler qui est ici l'angle z de braquage des gouvernes de bord de fuite 10 de l'empennage canard se traduisant par un ordre de commande transmis aux organes de réglage ou servo-moteurs d'actionnement des gouvernes 10. Grâce à ces dispositifs de commande de vol complémentaires pour vol à basse vitesse, les performances de vol en particulier au décollage et à l'atterrissage sont sensiblement accrues.

L'avion étant pourvu de dispositifs de commande de vol complémentaires pour toutes les phases de vol, des moyens peuvent être prévus pour influencer la stabilité longitudinale de l'avion. Une telle action utile peut être obtenue à l'aide d'une conjugaison de la commande de débattement des gouvernes de bord de fuite 10 de l'empennage canard 8 avec l'angle d'incidence (non représenté) de l'avion. A cette conjugaison peut être superposé avantageusement un braquage de la gouverne 10 en fonction du nombre de Mach ou de la vitesse de vol de l'avion. Le schéma synoptique fonctionnel d'un tel système d'asservissement de la gouverne 10 d'empennage canard à l'angle d'incidence et éventuellement au nombre de Mach ou à la vitesse de vol est illustré par la figure 3 représentant une variante d'exécution spécifique de la disposition précitée. Sur cette figure, le calculateur de bord 11 comporte, d'une part, trois entrées respectivement w pour l'angle d'incidence (ou le nombre de Mach ou la vitesse de vol), u pour l'angle de braquage des volets hypersustentateurs 3 et v pour l'angle de braquage des becs de bord d'attaque 4 ainsi que, d'autre part, la sortie précitée z pour l'angle de braquage de la gouverne 10 d'empennage canard.

Selon une variante d'exécution non représentée, l'angle de braquage des gouvernes de bord de fuite 10 de l'empennage canard 8 peut être asservi à la position relative notamment angulaire du plan stabilisateur réglable 6 de l'empennage horizontal arrière 5.

Enfin, selon un autre mode de réalisation de l'invention, l'empennage horizontal arrière 5 présente une configuration soit invariable, soit sélectivement réglable et le plan 9 de l'empennage canard 8 est à position relative au moins angulaire sélectivement réglable, c'est-à-dire susceptible d'un braquage variable en fonction des conditions actuelles de vol de l'avion.

## Revendications

1. Avion du type comprenant des ailes principales (2) fixées en un point intermédiaire du fuselage (1), chaque aile principale (2) comportant au moins un volet hypersustentateur (3) et au moins un bec de bord d'attaque (4), un empennage horizontal (5) à au moins un plan stabilisateur (6) monté à l'arrière du fuselage (1) et muni d'une gouverne de profondeur (7), et un empennage canard (8) monté à l'avant du fuselage (1) en avant du centre de gravité de l'avion et comportant, de chaque côté, un plan (9) pourvu d'une gouverne mobile (10) de bord de fuite, et des moyens de commande (11) pour asservir la position angulaire de chaque gouverne (10) dudit empennage canard (8) à des paramètres influencant la stabilité longitudinale de l'avion, caractérisé en ce que chaque gouverne (10) dudit empennage canard (8) est asservie à la position angulaire dudit plan stabilisateur (6), à position angulaire sélectivement variable, dudit empennage horizontal (5) par l'intermédiaire desdits moyens (11) de commande.

2. Avion selon la revendication 1, caractérisé en ce que chaque gouverne (10) précitée de l'empennage canard (8) précité est asservie à la vitesse de vol de l'avion.

## Patentansprüche

1. Flugzeug derjenigen Bauart mit an einer Zwischenstelle des Rumpfes (1), befestigten Hauptflügel (2) wobei jeder Hauptflügel (2) wenigstens eine auftriebserhöhende Klappe (3) und wenigstens einen Vorflügel (4) aufweist, einem Höhenleitwerk (5) mit wenigstens einer hinten am Rampf (1) angebrachten und mit einem Höhenruder (7) versehenen Höhenflosse (6), und einem vorn am Rumpf (1) vor dem Schwerpunkt des Flugzeugs angeordneten und auf jeder Seite eine mit einer beweglichen Hinterkantensteuerfläche (10) versehenen Flosse aufweisenden Kopfleitwerk (8), und Steuermittel (11) um die Winkelstellung jeder Steuerfläche (10) des besagten Kopfleitwerks (8) die Längsstabilität des Flugzeugs beeinflussenden Parametern im Nachlauf zuzuordnen, dadurch gekennzeichnet, dass jede Steuerfläche (10) des besagten Kopfleitwerks (8) der Winkelstellung der besagten in ihrer Winkelstellung wahlweise veränderlichen Höhenflosse (6) des besagten Höhenleitwerks (5) über die besagten Steuermittel (11) Nachlauf zugeordnet ist.

2. Flugzeug nach Anspruch 1, dadurch gekennzeichnet, dass jede besagte Steuerfläche (10) des besagten Kopfleitwerks (8) der Fluggeschwindigkeit des Flugzeugs durch Nachlaufsteuerung zugeordnet ist.

## Claims

1. Aircraft of the kind comprising main wings (2) fixed at an intermediate position of the fuselage (1), each main wing (2) comprising at least one lift-increasing flap (3) and at least one leading edge slat (4), a horizontal tail surface (5)

3

with at least one stabilizer plane (6) mounted at the rear of the fuselage (1) and provided with one elevator (7) and a canard airfoil (8) mounted at the forward portion of the fuselage (1) forward of the center of gravity of the aircraft and comprising on each side a plane (9) fitted with a movable trailing edge control surface (10), and operating means (11) for causing the angular position of each control surface (10) of said canard airfoil (8) to follow up parameters influencing of the longitudinal stability of the aircraft, characterized in that each control surface (10) of said canard airfoil (8) is caused to follow up the angular position of said stabilizer plane (6), having a selectively variable angular position, of said horizontal tail surface (5) through the medium of said operating means (11).

2. Aircraft according to claim 1, characterized in that each aforesaid control surface (10) of the aforesaid canard airfoil (8) is made to follow up the flight speed of the aircraft.

*Fig. 1*

*Fig. 2*

*Fig. 3*